# FASCICULE DE BREVET EUROPEEN

(11) **EP 0 417 265 B1**
(45) Date de publication et mention de la délivrance du brevet: **14.12.1994**
(21) Numéro de dépôt: 90906256.4
(22) Date de dépôt: 30.03.1990
(51) Int. Cl.: G06F 1/16, G06F 1/00, F16M 11/10, F16C 11/10

(54) **APPAREIL DE TRAITEMENT D'INFORMATIONS PORTATIF A ECRAN ORIENTABLE**
TRAGBARES DATENVERARBEITUNGSGERÄT MIT EINEM SCHWENKBAREN BILDSCHIRM
PORTABLE INFORMATION PROCESSING DEVICE WITH ADJUSTABLE SCREEN

(30) Priorité: 31.03.1989 FR 8904235
(43) Date de publication de la demande: 20.03.1991
(73) Titulaire: TELEMECANIQUE, 92504 Rueil Malmaison Cedex (FR)
(72) Inventeur: QUEAU, Michel, F-92130 Issy-les-Moulineaux (FR)
(74) Mandataire: de Saint-Palais, Arnaud Marie
(86) Numéro de dépôt international: FR9000222
(87) Numéro de publication internationale: WO9012356

(56) Documents cités:
- EP-A- 0 257 589
- CH-A- 493 751
- GB-A- 2 190 703
- GB-A- 2 200 783
- US-A- 4 624 434
- US-A- 4 781 422
- IBM Technical Disclosure Bulletin, vol. 24, no. 4, septembre 1981, (New York, US), I. Golledge: "Tilt mechanism for a display device", pages 1967-1968.

## Description

La présente invention a pour objet un appareil de traitement d'information se présentant sous la forme d'un coffret portable comprenant, d'une part, un corps principal pourvu d'une base et destiné à recevoir une alimentation et des circuits de traitement et, d'autre part, des moyens de dialogue à écran et/ou clavier qui sont disposés dans un boîtier plat relié au corps principal à l'aide de moyens de support incluant au moins un bras de support pivotant sur le corps principal autour d'un axe de pivotement XX′, et de moyens de maintien en position angulaire réglables tant en hauteur qu'angulairement.

D'une manière générale, on sait qu'il a déjà été proposé des appareils de ce genre dans lesquels l'écran est relié au corps principal par l'intermédiaire d'au moins un levier articulé sur le corps principal et sur l'écran au moyen de deux articulations respectives distantes l'une de l'autre et axées parallèlement l'une par rapport à l'autre. Dans ce cas, le maintien en position de l'écran est assuré par des garnitures de friction agissant au niveau des articulations.

Il s'avère que ce mode de maintien en position angulaire présente de nombreux inconvénients.

Ainsi, dans le cas où l'on souhaite obtenir un maintien ferme en position, il conviendra d'utiliser des garnitures assurant un coefficient de frottement élevé. On constate alors que l'effort à exercer pour effectuer un réglage devient important et, qu'en outre, du fait de la prépondérance du coefficient de frottement statique vis-à-vis du coefficient de frottement dynamique, il devient pratiquement impossible d'effectuer un réglage précis.

En outre, lorsqu'on veut amener l'écran en position haute, on provoque un soulèvement du corps principal sans pour autant obtenir le résultat recherché.

GB-A-2 200 783 divulgue un écran relié à un corps principal par un levier articulé sur le corps principal et sur l'écran au moyen de deux articulations respectives d'axes parallèles tel que décrit la préambule de la revendication 1.

L'invention a donc plus particulièrement pour but de supprimer ces inconvénients.

Elle propose un appareil du type susdit caractérisé en ce que les moyens de maintien réglable sont disposés coaxialement à l'axe de pivotement XX′ du bras de support et comprennent un dispositif à roue libre orienté dans le sens α de l'élévation du boîtier plat et placé mécaniquement en série avec un dispositif d'accouplement angulaire à friction, ces deux dispositifs étant eux-mêmes coaxiaux entre eux.

Il est clair que, grâce à une telle disposition, il est possible de soulever le boîtier plat sans rencontrer de résistance sensible et sans risquer de soulever le corps principal. par contre, l'effort nécessaire pour abaisser le boîtier plat s'effectue en direction de la base du corps principal, laquelle repose sur une surface de travail. Cet effort pourra donc être relativement important sans qu'il en résulte un quelconque inconvénient.

Des modes de réalisation de l'invention seront décrits ci-après, à titre d'exemples non limitatifs, avec référence aux dessins annexés dans lesquels :
La figure 1 est une vue latérale schématique d'un appareil de traitement en coffret ;
La figure 2 est une coupe axiale schématique d'une articulation de l'appareil représenté figure 1, équipée d'un dispositif à roue libre et d'un dispositif d'accouplement angulaire à friction ;
La figure 3 est une coupe axiale, à plus grande échelle, du dispositif à roue libre utilisé figure 2 ;
La figure 4 est une coupe transversale de deux variantes d'exécution de garnitures de friction utilisables dans l'articulation représentée figure 2, l'une des variantes étant située sur le côté a de la figure, tandis que l'autre variante est représentée sur le côté b ;
La figure 5 montre, en perspective schématique partielle, un dispositif à roue libre utilisant un ressort hélicoïdal ;
Les figures 6 et 7 représentent schématiquement en coupes axiales partielles, deux variantes d'exécution d'un dispositif d'accouplement à friction dont les surfaces de friction sont placées perpendiculairement à l'axe d'articulation XX′ ;
La figure 8 est une coupe axiale d'un ensemble comprenant un dispositif à roue libre du type de celui représenté sur la figure 5 et un dispositif d'accouplement à friction à surfaces de friction coniques ;
La figure 9 est une vue schématique en perspective éclatée d'un autre mode d'exécution d'un dispositif d'articulation bras/écran comprenant un dispositif à roue libre et un dispositif d'accouplement à friction.

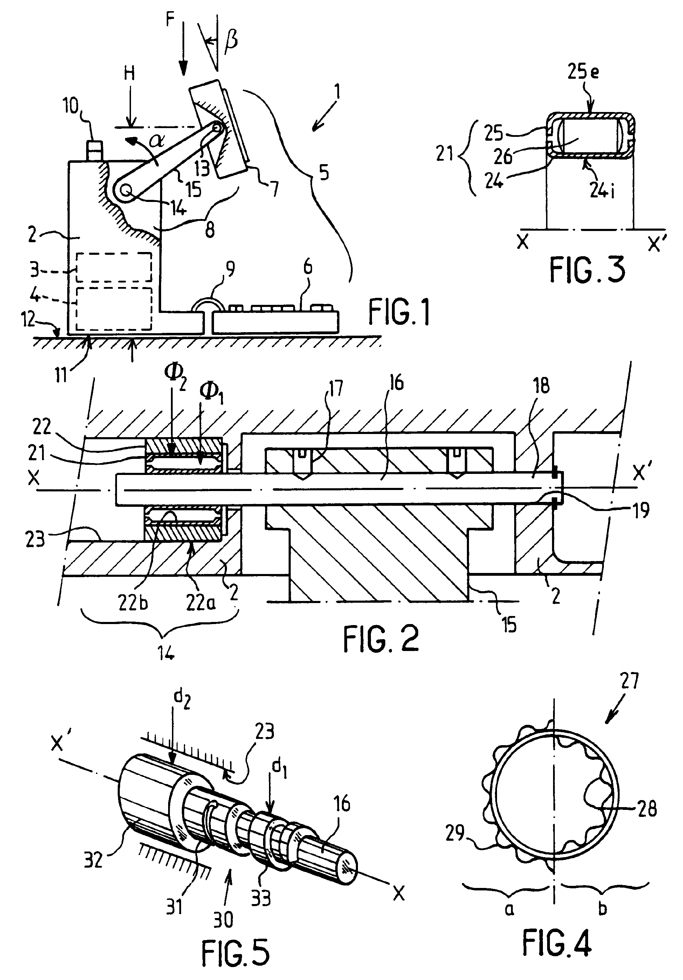

Dans l'exemple représenté figure 1, l'appareil de traitement d'information en coffret 1 comprend un corps principal 2 dans lequel se trouvent notamment une alimentation 3 et des circuits de traitement 4, un terminal 5 comprenant un clavier 6 et un écran 7 et des moyens 8, respectivement 9, pour relier mécaniquement et électriquement ceux-ci au corps principal.

Le corps principal comporte une poignée 10 pour son transport et une base 11 pour sa dépose sur une surface de réception 12.

Dans cet exemple, des moyens de liaison orientables 8 permettent de donner à un écran 7 une position en hauteur - H - choisie, tandis qu'une orientation angulaire - β - peut lui être communiquée grâce à une articulation 13 qui, avec l'articulation 14 solidaire du corps, et un bras 15, constituent lesdits moyens de liaison.

On peut imaginer que l'écran de visualisation puisse comprendre tout ou partie des touches disposées ici sur un clavier séparé, compte tenu de besoins de dialogue particuliers.

Comme cela est plus particulièrement visible sur la figure 2, au niveau de l'articulation 14, le bras 15 est rendu solidaire d'un arbre libre d'axe XX′, 16, par exemple au moyen de vis-pointeaux 17, tandis qu'une extrémité 18 de cet arbre 16 pivote dans un palier 19 du corps principal 2.

Une extrémité opposée 20 de cet arbre 16 traverse et est emmanchée avec serrage dans l'alésage central d'un dispositif à roue libre 21, tandis qu'un dispositif d'accouplement à friction 22 est disposé entre cette roue libre et un alésage concentrique 23 du corps principal 2.

En d'autres termes, les deux dispositifs (à roue libre et d'accouplement à friction) sont placés radialement, l'un autour de l'autre, le diamètre 0̸₁ dispositif à roue libre étant inférieur au diamètre 0̸₂ du dispositif d'accouplement à friction.

Dans cet exemple, le dispositif d'accouplement à friction 21 utilise une bague de friction, de préférence radialement et élastiquement compressible, montée entre l'alésage 23 et la surface extérieure cylindrique du dispositif à roue libre 21. Le serrage de cette bague de friction contre ledit alésage et ladite surface extérieure étant obtenu par des valeurs appropriées données aux diamètres respectifs des surfaces cylindriques coaxiales de la bague de friction.

La propriété de roue libre est dirigée dans le sens α de la figure 1, et la propriété d'accouplement positif est dirigée en sens inverse, de sorte que l'on pourra soulever l'écran 7 en entraînant le levier 15 mais sans communiquer d'effort parasite au corps principal. Dès que l'on aura donné à l'écran la hauteur - H - requise, celui-ci restera en place en raison du couple de maintien développé par le dispositif d'accouplement à friction. Lorsque l'on procède au rangement de l'appareil, ou à un ajustage en hauteur en exerçant en sens F un effort sur l'écran 7, la roue libre reste bloquée et l'on observe un glissement de l'accouplement à friction. Cette action ne provoque pas un déplacement du corps principal puisque la base 11 de celui-ci repose sur la surface de travail 12.

Selon le mode de réalisation avantageux représenté sur la figure 3, le dispositif à roue libre 21 est constitué par deux cages 24, 25 entre lesquelles sont disposées des aiguilles ou rouleaux 26. L'une de ces deux cages, à savoir la cage intérieure 24, présente une surface intérieure cylindrique lisse 24ᵢ, tandis que l'autre cage 25 présente une surface extérieure cylindrique 25ₑ lisse. Des moyens élastiques non représentés exercent sur ces aiguilles des efforts tangentiels qui, en relation avec des surfaces internes obliques d'une cage, provoquent un engagement dans une seule direction angulaire. La cage interne 24 est emmanchée à force sur l'arbre 16 et la cage externe 25 est emmanchée à l'intérieur d'une bague métallique 27 dont deux versions sont illustrées sur la figure 4 (côté a et côté b). Cette bague 27 présente sur au moins une fraction de sa longueur axiale des ondulations élastiques 28, 29 qui font apparaître par déformation élastique un couple de serrage bien déterminé entre la cage 25 et l'alésage 23 du corps. Ces deux dispositifs ou des dispositifs voisins sont vendus sur le marché par exemple sous les noms de marque "INA-HF" et, respectivement "STAR".

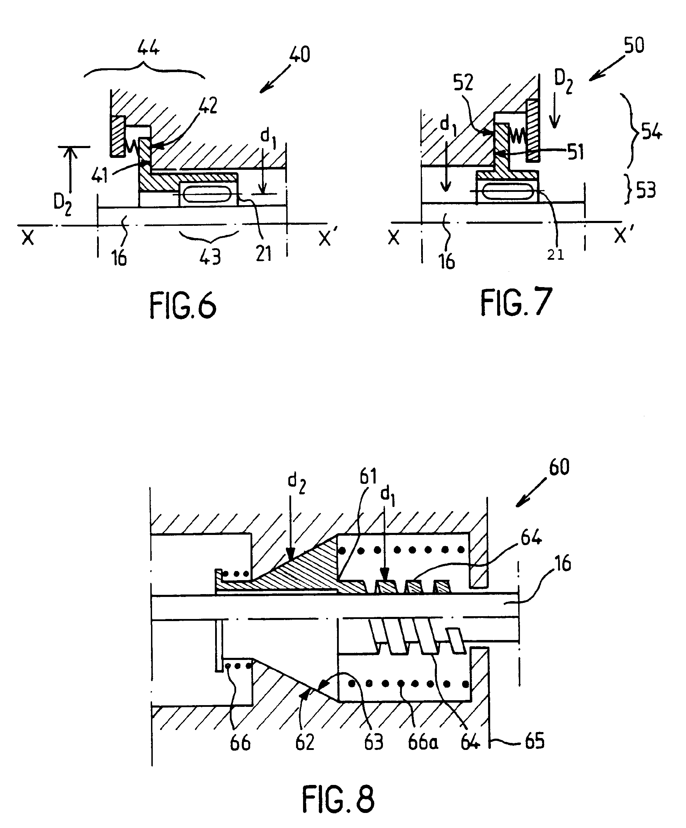

Au lieu de ce mode de réalisation dans lequel les deux dispositifs sont placés radialement en série entre l'arbre 16 et le corps 2, on peut utiliser un mode de réalisation 30 de l'articulation dans lequel l'effet d'accouplement unidirectionnel est obtenu grâce à une pièce tubulaire 31 comportant une portion lisse 32 et une portion 33 prenant la forme d'un ressort hélicoïdal, voir figure 5 ; lorsque les spires serrent légèrement l'arbre 16, un coincement s'effectue si celui-ci tourne dans le sens d'enroulement et un glissement s'opère en sens inverse. Avantageusement, les diamètres d₁, d₂ de ces deux dispositifs pourront être prévus sensiblement égaux.

La portion 32 peut être directement emmanchée à frottement mesuré dans l'alésage 23 ou faire appel à une bague telle que 27. Il est clair que la cage 25 du mode de réalisation précédent peut également être emmanchée directement dans un alésage 23 de diamètre approprié et donc avec un frottement mesuré.

Les figures 6 et 7 montrent des variantes d'exécution dans lesquelles les dispositifs d'accouplement à friction 40, respectivement 50, font appel à des surfaces 41, 42, respectivement 51, 52, qui sont placées perpendiculairement à l'axe XX′. Dans la figure 6, un montage série des deux dispositifs de roue libre 43, 53 et d'accouplement à friction 44, 54 est fait parallèlement à l'axe, tandis au'il est radial à la figure 7. Dans ces deux cas, des moyens élastiques ajustables 43, 44, respectivement 53, 54, confèrent au couple de glissement une valeur choisie.

Dans ces exemples, les deux dispositifs (accouplement à friction et dispositif à roue libre) présentent des diamètres d₁, D₂ différents. On constate notamment que dans l'exemple représenté sur la figure 7, le diamètre D₂ du dispositif d'accouplement à friction 54 est supérieur au diamètre d₁ du dispositif à roue libre.

A la figure 8, on a représenté un mode de réalisation 60 où l'accouplement à friction fait appel à une pièce tubulaire métallique 61 comprenant une surface conique 62 coopérant avec une surface 63 correspondante du corps 65 sous l'effet d'un ressort axial 66 ou respectivement 66ₐ, et un enroulement hélicoïdal 64 analogue au précédent 33.

Bien entendu, l'invention ne se limite pas aux modes d'exécution précédemment décrits.

Ainsi, par exemple :
- le palier 18, 19 pourrait être placé à gauche du dispositif d'articulation 14,
- ce palier 18, 19 pourrait être supprimé à condition de donner au dispositif à roue libre 21, 22 des longueurs axiales compatibles avec la charge qu'il supporterait alors en porte-à-faux,
- dans le cas d'une suppression du palier 18, 19, l'accroissement de longueur pourra être obtenu par la mise en parallèle de deux dispositifs à roue libre 21, 22 dans le dispositif d'articulation 14.

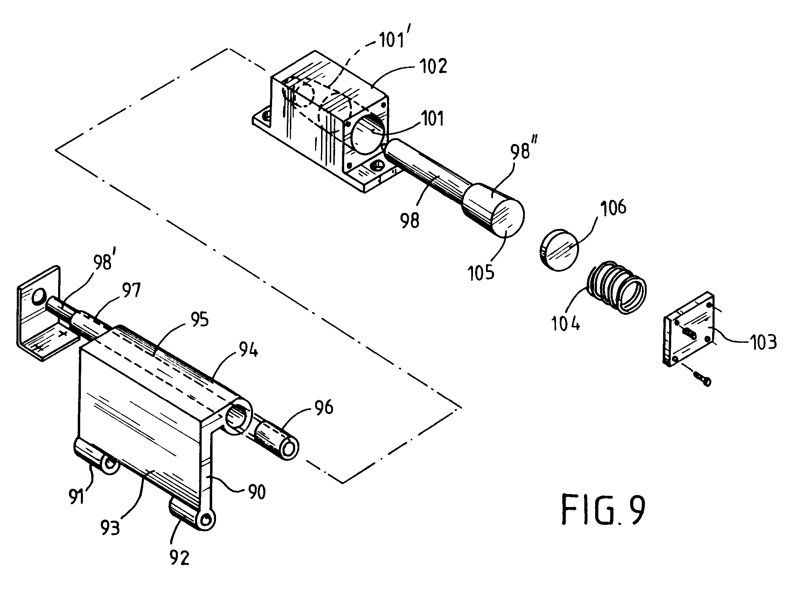

Avec référence à la figure 9, l'articulation du bras 90 sur le corps de l'appareil s'effectue au moyen d'éléments de charnière coaxiaux classiques 91, 92 solidaires de la bordure 93 dudit bras 90.

Pour son articulation à l'écran, ce bras 90 comprend au niveau de sa bordure 94, opposée à la bordure 93, un alésage cylindrique 95 axé parallèlement à l'axe d'articulation des éléments de charnière 91, 92.

A l'intérieur de cet alésage sont respectivement engagés un dispositif à roue libre 96, par exemple du type de celui représenté sur la figure 3, et un palier 97 au travers duquel passe un axe d'articulation 98 qui dépasse de part et d'autre du bras pour former deux tourillons 98′, 98˝. Bien entendu, l'axe 98 pivote librement dans le palier 97 tandis qu'il se trouve solidarisé à la cage intérieure du dispositif à roue libre 96. Par contre, la cage extérieure de ce dispositif 96 est solidaire du bras 90.

Le tourillon 98′, de forme cylindrique, tourillonne librement dans une chape d'articulation 99 solidaire de l'écran. Par contre, le tourillon 98˝ présente une forme tronconique convexe allant en s'évasant au fur et à mesure que l'on s'écarte du bras 90. Ce tourillon 98˝ s'engage dans une cavité 101 de forme cylindrotronconique réalisée dans une pièce 102 solidarisée à l'écran, la conicité de la forme conique 101′ de cette cavité 101 étant sensiblement identique à celle de la forme tronconique du tourillon 98˝ de manière à ce que ces deux formes coniques puissent venir s'appliquer l'une contre l'autre en réalisant un accouplement à friction.

La cavité cylindrotronconique 101 débouche à l'extérieur du côté opposé au bras 90 et peut être refermée de ce côté grâce à un couvercle 103 solidarisé à la pièce 102, par exemple par vissage.

La force d'application de la forme tronconique du tourillon 98˝ sur la forme conique 101′ de la cavité 101 est engendrée par un ressort 104 prenant appui, d'un côté, sur la face radiale d'extrémité 105 du tourillon 98˝, par l'intermédiaire d'une rondelle 106 et qui est retenu, de l'autre côté, par le couvercle 103.

Bien entendu, l'invention concerne également les diverses variantes de réalisation de ce dispositif. Ainsi, par exemple, au lieu d'utiliser un seul axe 98, il serait possible d'utiliser deux tourillons 98′, 98˝ coaxiaux mais séparés l'un de l'autre, ces deux tourillons s'engageant dans deux cavités borgnes réalisées dans le bras (au lieu d'un alésage s'étendant sur toute la largeur dudit bras).

## Revendications

1. Appareil de traitement d'information portatif, comprenant, d'une part, un corps principal pourvu d'une base et destiné à recevoir une alimentation et des circuits de traitement et, d'autre part, des moyens de dialogue à écran et/ou clavier qui sont disposés dans un boîtier plat relié au corps principal à l'aide de moyens de support incluant au moins un bras de support pivotant sur le corps principal autour d'un axe de pivotement XX′, et de moyens de maintien en position angulaire réglables tant en hauteur qu'angulairement,
caractérisé en ce que les moyens de maintien en position (14) sont disposés coaxialement audit axe de pivotement XX′ et comprennent un dispositif à roue libre (21) orienté dans le sens - α - de l'élévation du boîtier plat (7) et placé mécaniquement en série avec un dispositif d'accouplement angulaire à friction (22), ces deux dispositifs étant eux-mêmes coaxiaux entre eux.

2. Appareil de traitement d'information selon la revendication 1,
caractérisé en ce que les deux susdits dispositifs (21, 22) respectivement (32, 33) sont placés axialement l'un à côté de l'autre.

3. Appareil de traitement d'information selon la revendication 2,
caractérisé en ce que les deux susdits dispositifs (33, 32) présentent des diamètres d1, d2 sensiblement égaux.

4. Appareil de traitement d'information selon la revendication 2,
caractérisé en ce que les deux susdits dispositifs (53, 54) présentent des diamètres - d1, D2 - différents, le diamètre -D2 - du dispositif d'accouplement à friction (54) étant supérieur au diamètre - d1 - de la roue libre.

5. Appareil de traitement d'information selon la revendication 4,
caractérisé en ce que le dispositif d'accouplement à friction (54) utilise des surfaces (51, 52) perpendiculaires à l'axe de rotation XX′ dont le serrage est ajustable parallèlement à cet axe.

6. Appareil de traitement d'information selon la revendication 2,
caractérisé en ce que ces deux dispositifs (21, 22) sont placés radialement, l'un autour de l'autre, le diamètre 0̸₁ de la roue libre étant inférieur au diamètre 0̸₂ du dispositif d'accouplement à friction.

7. Appareil de traitement d'information selon la revendication 1,
caractérisé en ce que le dispositif d'accouplement à friction (21) utilise des surfaces cylindriques (22ₐ) respectivement (22_{b}) coaxiales dont le serrage est obtenu par des valeurs appropriées données à leurs diamètres respectifs.

8. Appareil de traitement d'information selon la revendication 7,
caractérisé en ce que le dispositif d'accouplement à friction (22, 32) fait appel à une bague intermédiaire (27) radialement et élastiquement compressible, qui est disposée entre le dispositif à roue libre (21) et un alésage (23) du corps (2) et qui peut glisser angulairement par rapport à celle-ci.

9. Appareil de traitement d'information selon la revendication 8,
caractérisé en ce que cette bague intermédiaire est une bague métallique (27) présentant sur au moins une fraction de sa longueur axiale et sur la totalité de sa circonférence, des ondulations (29, 28) régulièrement disposées.

10. Appareil de traitement d'information selon la revendication 1,
caractérisé en ce que le dispositif à roue libre (21) qui utilise des aiguilles (26) disposées entre deux cages sensiblement annulaires (24, 25) présente des surfaces, l'une extérieure (25ₑ) et l'autre intérieure (24ᵢ), cylindriques et lisses.

11. Appareil de traitement d'information selon la revendication 10,
caractérisé en ce que les dispositifs à roue libre (21) et d'accouplement à friction (22) constituent l'un des paliers (14) d'un arbre (16) solidaire d'un bras orientable (15) et ayant un second palier (18, 19) coaxial.

12. Appareil de traitement d'information selon la revendication 1,
caractérisé en ce aue le dispositif à roue libre (33) fait appel à des surfaces tubulaires enroulées en hélice.

13. Appareil de traitement d'information selon la revendication 1,
caractérisé en ce que l'articulation de l'écran sur le susdit bras (90) s'effectue au moyen d'un dispositif d'articulation comprenant un axe (98) monté rotatif, d'une part, sur ledit bras (90), par l'intermédiaire d'un dispositif à roue libre (96) et, d'autre part, sur l'écran, par l'intermédiaire d'un dispositif d'accouplement à friction (98˝, 101 à 106).

14. Appareil de traitement d'information selon la revendication 11,
caractérisé en ce que le susdit accouplement à friction fait coopérer une forme tronconique convexe (98˝) prévue à l'extrémité de l'arbre (98) avec une forme cylindrotronconique concave (101) réalisée dans une pièce (102) solidaire de l'écran, les deux formes coniques étant appliquées l'une contre l'autre grâce à un ressort (104) qui agit sur l'extrémité de l'arbre (98).

## Claims

1. Portable information processing device comprising, on the one hand, a main body with a base and intended to receive a power supply, and processing circuits and, on the other hand, screen and/or keyboard dialogue means which are disposed in a flat box connected to the main body by support means comprising at least one support arm which pivots on the main body around a pivoting axis XX′ and means for holding it in an angular position, which are adjustable both in height and angularly, characterized in that the holding means (14) are disposed coaxially to said pivoting axis XX′ and comprise a free wheel device (21) directed in the direction a of elevation of the flat box (7) and placed mechanically in series with an angular friction coupling device (22), these two devices being themselves coaxial with each other.

2. Information processing apparatus according to claim 1, characterized in that said two devices (21, 22) respectively (32, 33) are placed axially one at the side of the other.

3. Information processing apparatus according to claim 2, characterized in that said two surfaces (33, 32) are of substantially equal diameters (d₁, d₂).

4. Information processing apparatus according to claim 2, characterized in that said two devices (53, 54) have different diameters (d₁, D₂), the diameter (D₂) of the friction coupling device (54) being greater than the diameter (d₁) of the free wheel device.

5. Information processing apparatus according to claim 4, characterized in that the friction coupling device (54) uses surfaces (51, 52) perpendicular to the axis of rotation XX′ whose clamping is adjustable parallel to this axis.

6. Information processing apparatus according to claim 2, characterized in that these two devices (21, 22) are placed radially, one about the other, the diameter 0̸₁ of the free wheel being less than the diameter 0̸₂ of the friction coupling device.

7. Information processing apparatus according to claim 1, characterized in that the friction coupling device (21) uses coaxial cylindrical surfaces (22a) respectively (22b) whose clamping is obtained by appropriate values given to their respective diameters.

8. Information processing apparatus according to claim 7, characterized in that the friction coupling device (22, 32) comprises an intermediate radially and resiliently compressible ring (27), which is disposed between the free wheei device (21) and a bore (23) of the body (2), and which may slide angularly with respect thereto.

9. Information processing apparatus according to claim 8, characterized in that this intermediate ring is a metal ring (27) having over at least a fraction of its axial length and over the whole of its circumference, evenly spaced apart corrugations (29, 28).

10. Information processing apparatus according to claim 1, characterized in that the free wheel device (21), which uses needles (26) disposed between two substantially annular cages (24, 25), has smooth and cylindrical surfaces, one external (25ₑ) and the other internal (24ᵢ).

11. Information processing apparatus according to claim 10, characterized in that the free wheel (21) and the friction coupling (22) devices form one of the bearings (14) of a shaft (16) fixed to an orientable arm (15) and having a second coaxial bearing (18, 19).

12. Information processing apparatus according to claim 1, characterized in that the free wheel device (33) comprises helically wound tubular surfaces.

13. Information processing apparatus according to claim 1, characterized in that articulation of the screen on said arm (90) is provided by means of an articulation device comprising a shaft (98) mounted for rotation, on the one hand, on said arm (90) via a free wheel device (96) and, on the other hand, on the screen via a friction coupling device (98˝, 101 to 106).

14. Information processing apparatus according to claim 11, characterized in that said friction coupling causes a convex truncated cone shape (98˝) provided at the end of the shaft (98) to cooperate with a concave cylindrical truncated cone shape (101) formed in a part (102) fast with the screen, the two conical shapes being applied one against the other by means of a spring (104) which acts on the end of the shaft (98).

## Patentansprüche

1. Tragbares Datenverarbeitungsgerät mit, einerseits, einem Hauptkörper, der eine Basis aufweist und der Stromversorgung und der Aufnahme von Verarbeitungsschaltungen dient und andererseits einen Bildschirm und/oder eine Tastatur aufweisenden Dialogmitteln, die in einem flachen Gehäuse angeordnet sind, welches mit dem Hauptkörper durch Haltemittel verbunden ist, welch Haltemittel mindestens einen Haltearm aufweisen, der auf dem Hauptkörper um eine Schwenkachse XX′ schwenkbar ist und Mittel, deren Höhe und Winkel einstellbar ist, um eine bestimmte Winkelposition beizubehalten,
dadurch gekennzeichnet, dass die Mittel (14) zur Beibehaltung der Position koaxial zur besagten Schwenkachse XX′ angeordnet sind und eine Vorrichtung mit Freilauf (21) aufweisen, die in der Anheberichtung a des flachen Gehäuses (7) und mechanisch in Reihe mit einer Reibungskuppelvorrichtung (22) angeordnet ist, wobei die besagten beiden Vorrichtungen ihrerseits koaxial zueinander angeordnet sind.

2. Datenverarbeitungsgerät nach Anspruch 1,
dadurch gekennzeichnet, dass die besagten beiden Vorrichtungen (21, 22) bzw. (32, 33) axial nebeneinander angeordnet sind.

3. Datenverarbeitungsgerät nach Anspruch 2,
dadurch gekennzeichnet, dass die besagten beiden Vorrichtungen (33, 32) im wesentlichen gleiche Durchmesser (d₁, d₂) haben.

4. Datenverarbeitungsgerät nach Anspruch 2,
dadurch gekennzeichnet, dass die besagten beiden Vorichtungen (53, 54) verschiedene Durchmesser (d₁, D₂) haben, wobei der Durchmesser (D₂) der Reibungskupplung (54) grosser ist als der Durchmesser (d₁) des Freilaufs.

5. Datenverarbeitungsgerät nach Anspruch 4,
dadurch gekennzeichnet, dass die Reibungskupplung (54) zur Drehachse XX′ senkrechte Flächen (51, 52) verwendet, deren Pressung parallel zur besagten Achse einstellbar ist.

6. Datenverarbeitungsgerät nach Anspruch 2,
dadurch gekennzeichnet, dass die besagten beiden Vorrichtungen (21, 22) radial eine um die andere herum angeordnet sind, wobei der Durchmesser φ₁ des Freilaufs geringer ist als der Durchmesser φ₂ der Reibungskupplung.

7. Datenverarbeitungsgerät nach Anspruch 1,
dadurch gekennzeichnet, dass die Reibungskupplung (22) koaxiale Zylinderflächen (22ₐ), bzw. (22_{b}) verwendet, deren Aufeinanderpressen erreicht wird, indem man für ihre Durchmesser geeignete Werte wählt.

8. Datenverarbeitungsgerät nach Anspruch 7,
dadurch gekennzeichnet, dass die Reibungskupplung (22, 32) einen radial und elastisch komprimierbaren Zwischenring (27) verwendet, der zwischen dem Freilauf (21) und einer Bohrung (23) des Körpers (2) angeordnet ist und im Verhältnis zum Freilauf im Winkel verschoben werden kann.

9. Datenverarbeitungsgerät nach Anspruch 8,
dadurch gekennzeichnet, dass besagter Zwischenring ein Metallring (27) ist, der auf mindestens einem Teil seiner axialen Länge und seinem gesamten Umfang regelmässig verteilte Wellungen (29, 28) aufweist.

10. Datenverarbeitungsgerät nach Anspruch 1,
dadurch gekennzeichnet, dass der Freilauf (21), welcher zwischen zwei im wesentlichen ringförmigen Käfigen (24, 25) angeordnete Nadeln (26) verwendet, glatte, zylindrische Flächen aufweist, d.h. eine aussere (25ₑ) und eine innere (24ᵢ) Fläche.

11. Datenverarbeitungsgerät nach Anspruch 10,
dadurch gekennzeichnet, dass die Vorrichtung mit Freilauf (21) und die Reibungskupplung (22) eines der Lager (14) einer Welle (16) bilden, die fest mit einem schwenkbaren Arm (15) verbunden ist und ein zweites koaxiales Lager (18, 19) aufweist.

12. Datenverarbeitungsgerät nach Anspruch 1,
dadurch gekennzeichnet, dass die Vorrichtung mit Freilauf (33) rohrförmige, spiralförmig aufgerollte Flächen verwendet.

13. Datenverarbeitungsgerät nach Anspruch 1,
dadurch gekennzeichnet, dass der Bildschirm an besagten Arm (90) durch eine Vorrichtung angelenkt ist, die eine Welle (98) aufweist, die einerseits auf besagten Arm (90) drehbar durch eine Freilaufvorrichtung (96) montiert ist und andererseits auf besagten Bildschirm durch eine Reibungskupplung (98˝, 101 bis 106).

14. Datenverarbeitungsgerät nach Anspruch 11,
dadurch gekennzeichnet, dass in besagter Reibungskupplung eine am Ende (98) der Welle vorgesehene konvexe, kegelstumpfförmige Ausbildung (98˝) mit der in einem konkaven Kegelstumpf endenden zylindrischen Ausbildung (101) eines mit dem Bildschirm fest verbundenen Teiles (102) zusammenwirkt und die beiden kegelförmigen Ausbildungen mittels einer auf das Ende (98) der Welle wirkenden Feder (104) gegeneinander angelegt werden.
